# EUROPEAN PATENT SPECIFICATION

(11) **EP 4 270 011 B1**
(45) Date of publication and mention of the grant of the patent: **30.09.2026**
(21) Application number: 21910141.7
(22) Date of filing: 29.11.2021
(51) Int. Cl.: G01N 35/00, G01N 35/02, G01N 35/04

(54) **AUTOMATED ANALYZER AND REAGENT STORAGE METHOD FOR AUTOMATED ANALYZER**
AUTOMATISIERTER ANALYSATOR UND REAGENZIENSPEICHERVERFAHREN FÜR AUTOMATISIERTEN ANALYSATOR
ANALYSEUR AUTOMATISÉ ET PROCÉDÉ DE STOCKAGE DE RÉACTIF POUR ANALYSEUR AUTOMATISÉ

(30) Priority: 22.12.2020 JP 2020212048
(43) Date of publication of application: 01.11.2023
(73) Proprietor: HITACHI HIGH-TECH CORPORATION, Tokyo 105-6409 (JP)
(72) Inventor: UMEKI Hiroya, Tokyo 105-6409 (JP); YASUI Akihiro, Tokyo 105-6409 (JP); TANOUE Hidetsugu, Tokyo 105-6409 (JP)
(74) Representative: MERH-IP Matias Erny Reichl Hoffmann Patentanwälte PartG mbB
(86) International application number: PCT/JP2021/043550
(87) International publication number: WO 2022/137989

(56) References cited:
- CN-U- 209 356 513
- JP-A- 2012 137 329
- JP-A- 2017 090 356
- JP-A- H09 127 123
- JP-A- H09 196 925
- JP-U- H0 676 863
- US-A1- 2020 241 029

## Description

### Technical Field

The present invention relates to an automatic analyzer that performs qualification/quantitative analysis of components in biological samples such as blood or urine and a method of storing reagents in an automatic analyzer.

### Background Art

As an example of an automatic analyzer that is capable of reducing the replacement work of a plurality of reagents, Patent Literature 1 describes an automatic analyzer that dispenses first and second reagents and a sample into a reaction vessel to measure a mixed solution made of these, the automatic analyzer including: a first reagent vessel and a second reagent vessel; a reagent rack; and a drive unit, in which the first reagent vessel contains a first reagent and the second reagent vessel contains a second reagent, the first reagent vessel and the second reagent vessel each have a support unit that is capable of coupling and decoupling each other, the reagent rack holds the first reagent vessel and the second reagent vessel, the reagent rack allows the decoupling of the support units such that the first reagent vessel and the second reagent vessel serve for analysis, and at the time of unloading the first reagent vessel and the second reagent vessel, and the drive unit moves the first reagent vessel and/or the second reagent vessel such that the support units couple to each other.

### Citation List

### Patent Literature

Patent Literature 1: Japanese Unexamined Patent Application Publication No. 2014-178311
Patent Literature 2: JP 2017 090356 A
Patent Literature **3:** CN 209 356 513 U
Patent Literature **4:** US 2020/241029 A1

### Summary of Invention

### Technical Problem

The automatic analyzer is a device that reacts a sample to an analysis reagent, which specifically reacts to a measurement target component in the sample, and detects a complex generated by this reaction by a spectroscopic method such as electrochemiluminescence, and the automatic analyzer is capable of automatically performing entire processes from the detection of measurement target components to the output of results.

Such an automatic analyzer is a device necessary for examination centers that contract for examinations/tests of samples and medical research facilities from hospitals and clinics in order to perform efficient analysis.

Typically, the automatic analyzer is roughly sorted into three categories depending on measurement items. First, the automatic analyzer is a biochemical analyzer that measures components such as sugar, cholesterol, proteins, and enzymes. Secondly, the automatic analyzer is an electrolyte analyzer that measures electrolytes such as sodium and potassium in the blood. Lastly, the automatic analyzer is an immune analyzer that measures components related to immune diseases such as cancer markers, thyroid hormones, and infectious disease markers.

In many cases, these three devices have different measurement principles, i.e., reaction principles for a sample to a reagent and detection principles for reaction complexes. Therefore, hardware components and functions are specifically different in analysis units.

Moreover, in regard to consumable items used for measurement, analysis reagents, for example, as described in Patent Literature 1, reagent components and reagent amounts necessary for analysis, for example, are different.

In order to comprehensively include biochemical analysis, electrolyte analysis, and immune analysis, the analyzers have to be introduced into a laboratory. The analyzers include all mechanisms necessary for analysis and have a certain footprint. The mechanism includes a sample dispensing mechanism, a reagent dispensing mechanism, a sample-reagent reaction mechanism, a detection mechanism, and any other mechanism, for example.

Therefore, from the viewpoint of saving space, in regard to shared functions that do not depend on the measurement principles, it is desirable to put the functions together as shared mechanisms, instead of the analyzers individually including mechanisms. One of the schemes includes sharing an analysis reagent storage. Here, the analysis reagent storage means a storage area included in the inside of the analyzer, which is not a storage area provided in a laboratory.

As described above, since a reagent amount varies among various analyzers due to the differences in the measurement principles, the capacity (size) per reagent pack varies among various analyzers in many cases. Moreover, even though the measurement principles are the same, the shape of the reagent pack sometimes varies depending on the type of reagent.

The reagent storage of the automatic analyzer includes reagent holding units that individually house a reagent pack. The holding unit has a function that restrains a swing of the pack accompanied by analyzer vibrations and has a design fit to a pack shape.

In the conventional automatic analyzer, in order to achieve the sharing of the reagent storage, a necessity arises that exclusive holding units corresponding to various reagents have to be included in the same storage.

For example, in the case in which a reagent pack for biochemical analysis (in the following, referred to as a biochemical reagent pack) and a reagent pack for immune analysis (in the following, referred to as an immune reagent pack) have different shapes and are desired to be housed in the same storage, two types of reagent holding units corresponding to the shapes have to be installed.

In this case, the total number of reagent packs storable on the analyzer at once is the same as the total number of corresponding exclusive holding units. As an example, a case is considered in which the exclusive holding unit of the biochemical reagent pack is provided at 20 positions and the exclusive holding unit of the immune reagent pack is provided at 20 positions, i.e., 40 positions in total.

In such a case, a user has to handle the number of preset positions, i.e., 20 positions of the biochemical reagent pack and 20 positions of the immune reagent pack, leading to a case in which the user is not able to house the packs at a free allocation, e.g., housing 30 biochemical reagent packs and 10 immune reagent packs simultaneously. Such restriction is likely to be a problem from the viewpoint of useability.
PTL 2 comprises a container storage rack that can suppress a storage capacity of a container from falling even when the container storage rack is enabled to store the containers different in size.
PTL 3 shows a reagent container retainer capable of retaining reagent containers of various sizes and an automatic analysis device with the reagent container retainer.
PTL 4 comprises an automatic analysis device that can easily realize introduction and replacement of additional reagents in operation even in a small-scale configuration.

The present invention is to provide an automatic analyzer whose restrictions related to the installation of reagent packs smaller than conventional analyzers and a method of storing reagents in an automatic analyzer. Solution to Problem

The present invention includes several solutions to solving the problem. For example, the present invention is an automatic analyzer that analyzes a sample using reagents according to a predetermined analysis item, the automatic analyzer includes a reagent storage that stores reagent packs containing the reagents. The reagent storage includes: a first holding unit configured to hold only a first reagent pack containing a first reagent among the reagents; a second holding unit configured to hold only a second reagent pack containing a second reagent that is different from the first reagent; and a third holding unit configured to hold both the first reagent pack and the second reagent pack. The first reagent pack and the second reagent pack are formed in a rectangular parallelepiped shape with an aspiration port for sucking reagents as an upper surface. The first reagent pack is formed to be longer in a vertical direction and shorter in a horizontal direction than that of the second reagent pack with the aspiration port as the upper surface. The first holding unit forms a first hole, the second holding unit forms a second hole, and the third holding unit forms a third hole and the third hole has a first region and a second region, which is on an upper side of the first region in the vertical direction and has a diameter larger than that of the first region.

### Advantageous Effects of Invention

According to the present invention, it is possible to reduce restrictions related to the installation of reagent packs smaller than conventional analyzers. Problems, configurations, and effects other than the ones described above will be apparent from the description below.

### Brief Description of Drawings

[FIG. 1] FIG. 1 is a diagram showing an example of a schematic configuration of an automatic analyzer of the invention.
[FIG. 2] FIG. 2 is a schematic perspective view of a reagent pack for immune analysis.
[FIG. 3] FIG. 3 is a schematic perspective view of a reagent pack for biochemical analysis.
[FIG. 4] FIG. 4 is an external view of a reagent storage in an automatic analyzer of Example 1.
[FIG. 5] FIG. 5 is a plan view of the reagent storage in a state where a lid is removed in the automatic analyzer of Example 1.
[FIG. 6] FIG. 6 is a plan view of the reagent storage in a state where the lid is attached in the automatic analyzer of Example 1.
[FIG. 7] FIG. 7 is a plan view of the reagent storage in a state where reagent packs are housed in all positions in the automatic analyzer of Example 1.
[FIG. 8] FIG. 8 is a plan view of the reagent storage in a state where immune reagent packs are housed in all positions of a third holding unit in the automatic analyzer of Example 1.
[FIG. 9] FIG. 9 is a diagram showing an arrangement relationship of an RFID tag reader of immunological and biochemical reagent packs in the reagent storage in the automatic analyzer of Example 1.
[FIG. 10] FIG. 10 is a schematic perspective view of the third holding unit in the reagent storage in the automatic analyzer of Example 1.
[FIG. 11] FIG. 11 is a schematic perspective view of a state where the immunological and biochemical reagent packs are housed into the third holding unit in the reagent storage in the automatic analyzer of Example 1.
[FIG. 12] FIG. 12 is a side view of a state where the immunological and biochemical reagent packs are housed into the third holding unit in the reagent storage in the automatic analyzer of Example 1.
[FIG. 13] FIG. 13 is a diagram showing a relationship of a pack installation height when the immunological and biochemical reagent packs are housed into the third holding unit in the reagent storage in the automatic analyzer of Example 1.
[FIG. 14] FIG. 14 is a side view of a state where an auxiliary adapter is attached to the third holding unit in the reagent storage in the automatic analyzer of Example 1.
[FIG. 15] FIG. 15 is a side view of a state where an auxiliary adapter for installing a test tube is attached to the third holding unit in the reagent storage in the automatic analyzer of Example 1.

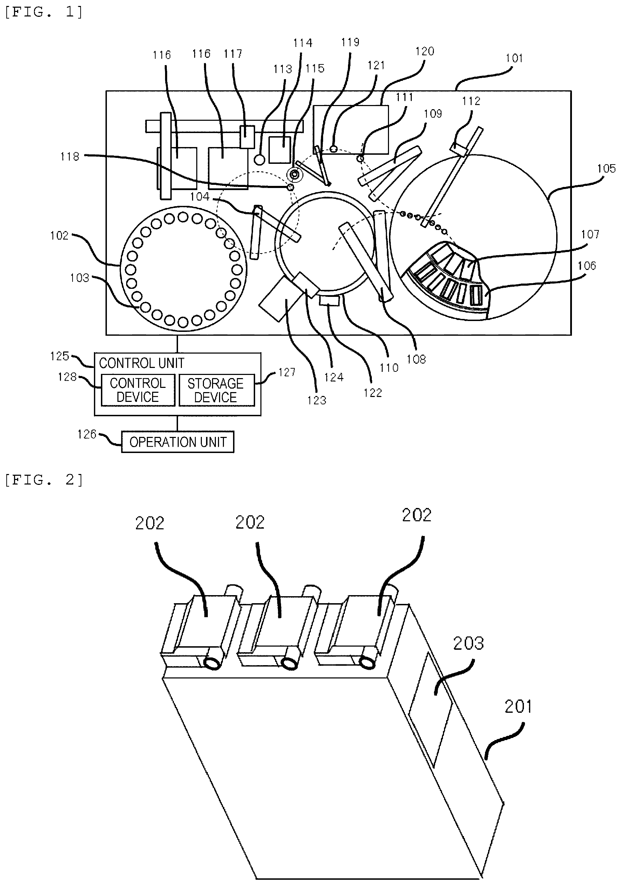

An example of an automatic analyzer and a method of storing reagents in an automatic analyzer according to the present invention will be described with reference to FIG. 1 to FIG. 15. Note that in the drawings used in the present specification, the same or the corresponding components are designated with the same or similar reference signs, and in some cases, a duplicate description of these components are omitted.

First, the overall structure of an automatic analyzer will be described with reference to FIG. 1. FIG. 1 is an example of a block diagram of an automatic analyzer according to the present invention.

In FIG. 1, an automatic analyzer 101 is an analyzer that performs analyzes a sample using a reagent corresponding to a predetermined analysis item, and includes a sample erection disk 102, a sample dispensing mechanism 104, a reagent storage 105, a reagent dispensing mechanisms 108 and 109, an incubator disk 110, a magnetic particle stirring arm 112, a first reaction vessel transport unit 117, a reaction vessel disposal hole 113, an incubator block 114, a reaction liquid stirring unit 115, a reaction vessel tray 116, a second reaction vessel transport unit 119, an immunodetection unit 120, a stirring unit 122, a biochemical detection unit 123, a reaction cell cleaning mechanism 124, a control unit 125, an operation unit 126, and the like.

The sample erection disk 102 has a structure that erects the sample vessel 103 in a ring. At the time of dispensing a sample, the sample erection disk 102 rotates and transports the sample vessel 103 to the access position of the sample dispensing mechanism 104.

The sample dispensing mechanism 104 is constituted of a rotation driving mechanism, a vertical driving mechanism, and a dispensing probe, and moves between a sample aspiration position and a sample discharge position by the rotation driving mechanism and the vertical driving mechanism.

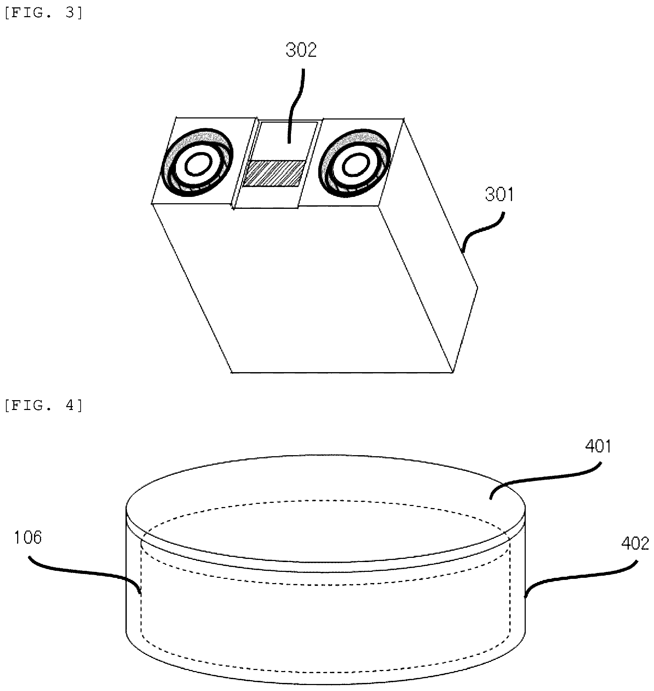

The reagent storage 105 is a mechanism that stores reagent packs 201 and 301 containing a reagent (see FIG. 2 and FIG. 3 respectively) and has a reagent disk 106 and a reagent pack holding unit 107. The reagent storage 105 includes a cooling function that enhances the onboard stability of reagent properties.

On the reagent disk 106, the reagent pack holding unit 107 is arranged in a double ring and is configured to hold a plurality of reagent packs 201 and 301. The reagent disk 106 has a rotation driving mechanism and moves the reagent packs 201 and 301 to predetermined positions on the circumference of a circle by rotational motion.

In the automatic analyzer 101 of the present example separately includes the reagent dispensing mechanism 108 for biochemical analysis and the reagent dispensing mechanism 109 for immune analysis. The configuration of the reagent dispensing mechanisms 108 and 109 are the same, being formed of a rotation driving mechanism, a vertical driving mechanism, and a dispensing probe. The reagent dispensing mechanisms 108 and 109 rotate and descend to a position of a predetermined type of reagent pack on the reagent disk 106, and aspirate a predetermined amount of a reagent. After aspirating the reagent, the reagent dispensing mechanisms 108 and 109 ascend. Subsequently, for example, the reagent dispensing mechanism 108 for biochemical analysis rotates and descends to a predetermined reaction cell on the incubator disk 110, which is a reagent discharge destination, and the reagent dispensing mechanism 109 for immune analysis rotates and descends to a reaction vessel installed at a reagent discharge position 111, which is a reagent discharge destination, and the reagent dispensing mechanisms 108 and 109 discharge reagents.

On the reagent disk 106, the magnetic particle stirring arm 112 as a stirring unit (also referred to as a stiller) is set. This magnetic particle stirring arm 112 moves to the upper region of the reagent pack containing a magnetic particle solution to be stirred, lowers the magnetic stirring element of the magnetic particle stirring arm 112, and rotates the stirring element to stir the magnetic particle solution. In order to avoid plain sedimentation of the magnetic particles in the solution, the magnetic particle stirring arm 112 stirs the magnetic particles immediately before dispensing the reagent.

In the following, immune analysis flow will be described in order of processes.

The first reaction vessel transport unit 117 has a driving mechanism in X-axis, Y-axis, and Z-axis directions and a reaction vessel gripping mechanism, and moves above the reaction vessel disposal hole 113, the incubator block 114, the reaction liquid stirring unit 115, and the reaction vessel tray 116.

The second reaction vessel transport unit 119 has a rotation driving mechanism, a vertical driving mechanism, and a reaction vessel gripping mechanism, and includes a function of moving the reaction vessel to the reaction liquid stirring unit 115 provided on a rotation track and reaction vessel installation positions such as a sample discharge position 118.

The first reaction vessel transport unit 117 moves the reaction vessel from the reaction vessel tray 116 to the sample discharge position 118. The sample dispensing mechanism 104 dispenses a sample in a predetermined amount into the reaction vessel installed at the sample discharge position. After that, the reaction vessel into which the sample is discharged is moved to the reagent discharge position 111 by the second reaction vessel transport unit 119.

The reagent dispensing mechanism 109 dispenses a predetermined amount of a reagent into the reaction vessel installed at the reagent discharge position 111. After that, the reaction vessel is moved to the reaction liquid stirring unit 115 by the second reaction vessel transport unit 119, and the sample and the reagent are stirred.

After stirring the reaction solution, the reaction vessel is moved to the incubator block 114 by the first reaction vessel transport unit 117. The incubator block 114 is heated or cooled at a suitable temperature in order to promote the reaction between the sample and the reagent. After completing the reaction process of the sample and the reagent on the incubator block 114, the reaction vessel is moved to the sample discharge position 118 by the first reaction vessel transport unit 117.

After that, the reaction vessel moved to a reaction liquid aspiration position 121 provided below the immunodetection unit 120 by the second reaction vessel transport unit 119. After that, the reaction solution is aspirated into the detecting unit in the immunodetection unit 120, and a reaction signal is measured.

After measuring the signal, the reaction vessel is moved to the sample discharge position 118 by the second reaction vessel transport unit 119, and is subsequently discarded to the reaction vessel disposal hole 113 by the first reaction vessel transport unit 117.

Next, a biochemical analysis flow in order of processes.

The incubator disk 110 is heated or cooled at a suitable temperature in order to promote the reaction between the sample and the reagent similar to the incubator block 114.

First, the sample dispensing mechanism 104 dispenses a sample in a predetermined amount into a predetermined reaction cell on the incubator disk 110. After that, the incubator disk 110 rotates and moves the reaction cell into which the sample is discharged to the access position of the reagent dispensing mechanism 108, and the reagent dispensing mechanism 108 dispenses a predetermined amount of a reagent to the reaction cell into which the sample is discharged.

Subsequently, the incubator disk 110 rotates and moves the reaction cell into which the sample and the reagent are discharged to the installation position of the stirring unit 122 installed, and the sample and the reagent are stirred by the stirring unit 122.

After completion of the reaction process of the sample and the reagent on the incubator disk 110, the incubator disk 110 rotates and moves the reaction cell containing the reaction solution in which the reaction is completed to the installation position of the biochemical detection unit 123.

After that, the detecting unit in the biochemical detection unit 123 measures a reaction signal. After measuring the signal, the reaction solution is discharged from the reaction cell by the reaction cell cleaning mechanism 124.

In the automatic analyzer 101, the mechanisms described above are referred to as an analysis operation unit.

Furthermore, in addition to the analysis operation unit, the automatic analyzer 101 includes the control unit 125 and the operation unit 126 that control the operation of devices in the automatic analyzer 101.

The control unit 125 is constituted of a hardware substrate and a computer, for example, and has a built-in storage device 127 such as a hard disk and a built-in control device 128.

The storage device 127 stores control parameters and the like corresponding to each unit, for example.

The control device 128 may be formed of hardware with an exclusive circuit board, or may be formed of software executed by a computer. In the case in which the control device 128 is formed of hardware, it is possible to achieve the control device 128 by integrating a plurality of computing units that executes processing on a circuit board, on a semiconductor chip, or in a package. In the case in which the control device 128 is formed of software, it is possible to achieve the control device 128 by mounting a high-speed general-purpose CPU on a computer to execute a program that executes a desired arithmetic operation process. It is possible to upgrade an existing analyzer with a recording medium on which this program is recorded. Moreover, these devices, circuits, and computers are connected via a cable or radio network, and data is appropriately sent and received.

The operation unit 126 is constituted of a display device, which is a display, and an input device such as a mouse, a keyboard, and the like.

Subsequently, the configurations of the reagent packs 201 and 301 preferably used in the automatic analyzer 101 of the present example will be described with reference to FIG. 2 and FIG. 3. FIG. 2 is a schematic perspective view of the reagent pack for immune analysis used in the automatic analyzer according to the present invention (in the following, referred to as an immune reagent pack). FIG. 3 is a schematic perspective view of the reagent pack for biochemical analysis (in the following, referred to as a biochemical reagent pack) used in the automatic analyzer according to the present invention.

In the immune reagent pack 201 shown in FIG. 2, three bottles form one set; one magnetic particle solution and two types of reagents form one set, for example. each bottle includes a main body that houses a reagent, an opening that is accessible to the reagent, and a lid portion 202 that is capable of sealing the opening. The bottle is formed in a rectangular parallelepiped shape with an aspiration port that aspirates a reagent as an upper surface.

On the side surface of the immune reagent pack 201, an RFID (Radio Frequency Identification) tag 203 is attached. The built-in memory of the RFID tag 203 stores a pack ID that identifies the immune reagent pack 201, the type of reagent housed in the reagent pack, the amount of the reagent, the expiration date of the reagent, and other necessary pieces of information. Note that a reading unit for the information on the reagent pack is not limited to the RFID, and other reading units for information such as barcodes can be used.

In the biochemical reagent pack 301 shown in FIG. 3, two bottles form one set, two types of reagents form one set, for example, and the bottle is formed in a rectangular parallelepiped shape with an aspiration port that aspirates a reagent as an upper surface, similar to the immune reagent pack 201. The biochemical reagent pack 301 is also attached with an RFID tag 302, similar to the immune reagent pack 201. To the immune reagent pack 201, a tag is attached on the side surface of the pack, and to the biochemical reagent pack 301, a tag is attached on the upper surface of the pack.

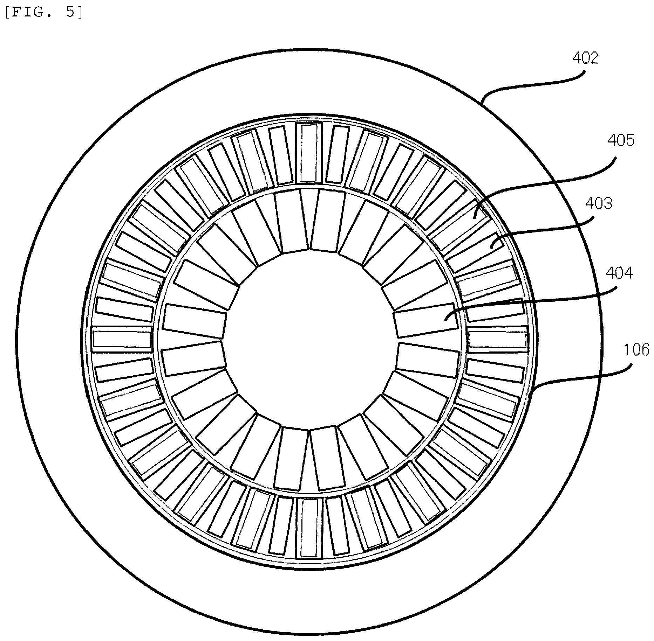

Next, the detail of the structure of the reagent storage 105 of the automatic analyzer 101 according to the present invention will be described with reference to FIG. 4 and the subsequent drawings. FIG. 4 is a diagram of the appearance of the reagent storage 105 related to the present invention. FIG. 5 is a plan view of the reagent storage 105 in a state where a lid 401 is removed.

As shown in FIG. 4, in order to control the temperatures of the immune reagent pack 201 and the biochemical reagent pack 301 at a constant temperature, the reagent disk 106 has the lid 401 and a jacket 402 having a thermal insulation function.

As shown in FIG. 5, the reagent disk 106 is arranged with a reagent pack holding unit in a double ring. On the inner circumferential side of this reagent disk 106, only provided is a second holding unit 404 that is capable of holding the biochemical reagent pack 301, which is the exclusive holding unit of the biochemical reagent pack 301 containing a second reagent whose type is different from a first reagent.

On the other hand, on the outer circumferential side, a first holding unit 403 that is capable of holding only the immune reagent pack 201, which is the exclusive holding unit of the immune reagent pack 201 containing the first reagent in the reagents and a third holding unit 405 that is capable of holding both the immune reagent pack 201 and the biochemical reagent pack 301 are alternately arranged.

The first holding unit 403, the second holding unit 404, and the third holding unit 405 are respectively formed of a first hole, a second hole, or a third hole.

Note that in FIG. 5, the case is shown in which the first holding unit 403 and the third holding unit 405 on the outer circumferential side are alternately arranged. In addition to this, for example, an arrangement can be provided in which a half of the surface of the reagent disk 106 is occupied only by the first holding unit 403 and the remaining surface is occupied only by the third holding unit 405, and an arrangement can be provided in which two or more first holding units 403 and third holding units 405 continue.

Moreover, in regard to the arrangement of the reagent pack holding units on the inner and outer circumferences, the second holding unit 404 is not necessarily installed on the inner circumferential side, arrangements are freely provided.

Here, when the aspiration port is set on the upper surface, the immune reagent pack 201 shown in FIG. 2 is formed in which its shape is longer in the vertical direction than the biochemical reagent pack 301 shown in FIG. 3 and is short in the horizontal direction. That is, compared with the immune reagent pack 201 housed in the first holding unit 403, the biochemical reagent pack 301 housed in the second holding unit 404 has a large occupation area per pack. Therefore, as shown in FIG. 5, for example, the second holding unit 404 is installed on the outer circumferential side where the total installation area is larger than the inner circumferential side, and thus it is possible to intend the improvement of packing efficiency of the packs.

Note that in regard to the total number and the ratio of numbers of the reagent pack holding units 107, FIG. 5 shows the case in which the first holding unit 403, the second holding unit 404, and the third holding unit 405 are provided at 17 positions (the ratio is 1 : 1 : 1).

In addition to this, for example, an increase in the size of the reagent storage 105 enables an increase of the total number as the ratio of the holding units is maintained. Moreover, it is possible to change only the ratio of the number of positions of the holding units as the size of the reagent storage 105 is maintained; for example, the first holding unit 403 is provided at 14 positions, the second holding unit 404 is provided at 14 positions, and the third holding unit 405 is provided at 23 positions.

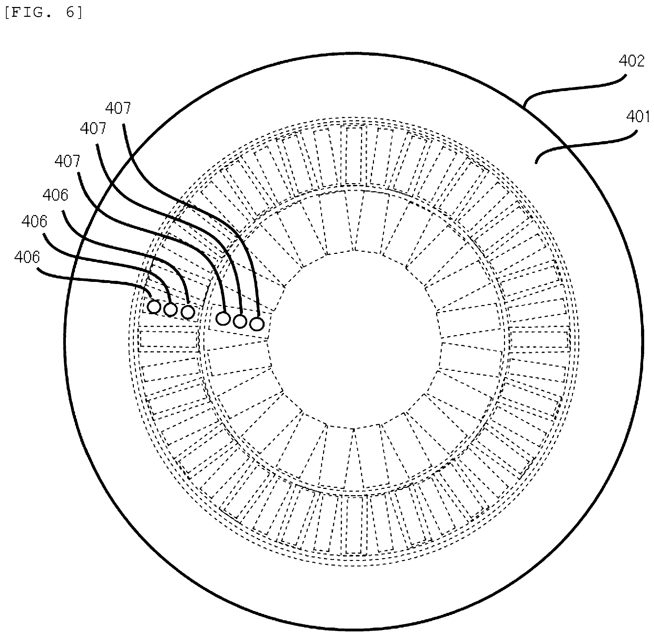

FIG. 6 is a plan view of the reagent storage in a state where the lid 401 is attached. As shown in FIG. 6, the lid 401 includes reagent aspiration holes 406 and 407, and the reagent dispensing mechanism 108/109 and the magnetic particle stirring arm 112 are accessible to the reagent pack even in a state where the lid 401 is closed.

The reagent aspiration hole 406 is a hole through which the reagent dispensing mechanisms 108 and 109 make access at the time of dispensing an immune reagent from the immune reagent pack 201 installed on the first holding unit 403 and the third holding unit 405, or at the time of dispensing a biochemical reagent from the biochemical reagent pack 301. On the other hand, the reagent aspiration hole 407 is a hole through which the reagent dispensing mechanism 108 makes access at the time of dispensing a biochemical reagent from the biochemical reagent pack 301 installed on the second holding unit 404.

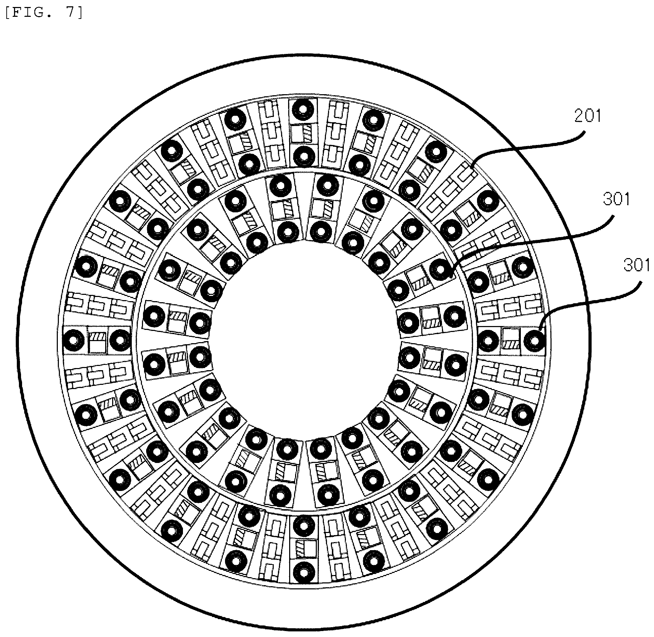

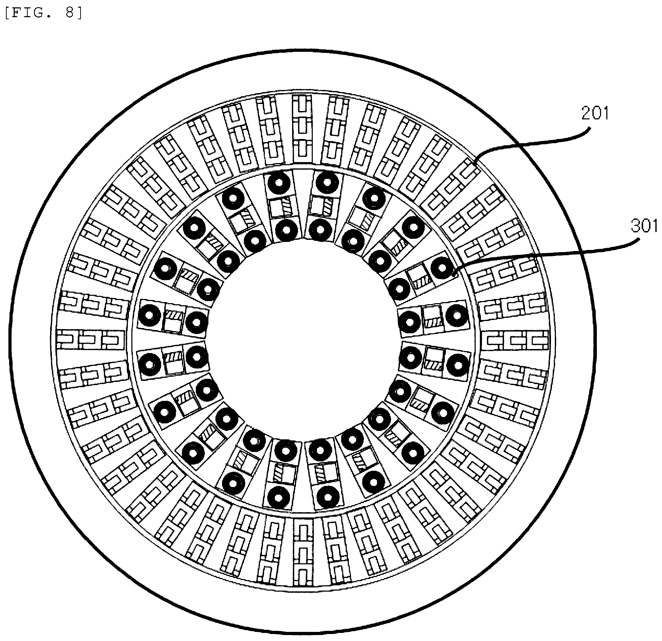

FIG. 7 and FIG. 8 are plan views of the reagent storage 105 in a state where the reagent packs 201 and 301 are housed at the entire positions.

In FIG. 7, the biochemical reagent pack 301 is housed at the entire positions in the third holding unit 405. In this manner, 34 biochemical reagent packs 301 at the maximum can be housed using the entire positions in the second holding unit 404 and the third holding unit 405.

On the other hand, in FIG. 8, the immune reagent pack 201 is housed at the entire positions in the third holding unit 405. In this manner, 34 immune reagent packs 201acn be held at the maximum. The biochemical reagent pack 301 and the immune reagent pack 201 can be allocated in the third holding unit 405 at a given ratio.

Here, in the present example, upon issuing an instruction when the user desires to mount a reagent, the control device 128 controls the rotation operation of the reagent disk 106 such that the first holding unit 403, the second holding unit 404, or the third holding unit 405, which are vacant and the reagent packs 201 and 301 are desired to be installed is brought directly below a reagent pack injection port (omitted for the convenience of the drawing) provided on the lid 401, and the control device 128 performs control such that the analyzer determines and presents which position the reagent packs 201 and 301 have to be installed.

At this time, when the immune reagent pack 201 is injected into the reagent storage 105, the control device 128 installs the immune reagent pack 201 on the first holding unit 403 in priority, whereas when the biochemical reagent pack 301 is injected into the reagent storage 105, the control device 128 installs the biochemical reagent pack 301 on the second holding unit 404 in priority. In the case in which the first holding unit 403 or the second holding unit 404 is not available, the immune reagent pack 201 is desirably installed on the third holding unit 405. Thus, it is possible to avoid an event that the pack is first installed on the third holding unit 405 of a high degree of freedom, and it is possible to maintain the degree of freedom of installation of the immune reagent pack 201 and the biochemical reagent pack 301 as high as possible.

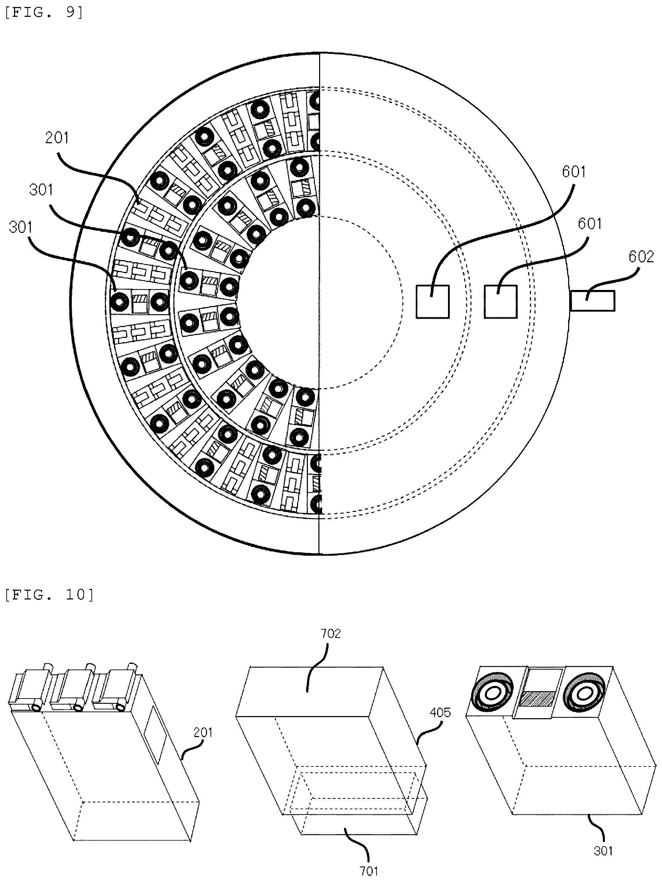

FIG. 9 shows an example of the arrangement of readers 601 and 602 of the RFID tags 203 and 302 of the reagent packs 201 and 301 in the reagent storage 105. As described above, the immune reagent pack 201 and the biochemical reagent pack 301 are attached with the RFID tags 203 and 302 that store reagent information. In the immune reagent pack 201, the RFID tag 203 is attached on the side surface of the pack, and in the biochemical reagent pack 301, the RFID tag 302 is attached on the upper surface of the pack.

In order to read the information on the RFID tags 203 and 302 in the reagent storage 105, as shown in FIG. 9, preferably, it is desired to install the reader at three sites.

That is, the RFID reader 601 that reads reagent information stored on the RFID tag 302 provided on the biochemical reagent pack 301 is provided at one site each on the inner circumferential side where the second holding unit 404 is provided in the upper part of the reagent storage 105 and a site above the outer circumferential side where the third holding unit 405 is provided.

Moreover, the RFID reader 602 that reads reagent information stored in the RFID tag 203 provided on the immune reagent pack 201 is desirably provided at one site on the outer circumferential side that is the side surface of the reagent storage 105 in which the first holding unit 403 and the third holding unit 405 are provided.

These RFID readers 601 and 602 are fixed to the inside of the reagent storage 105. The reagent disk 106 rotates and moves the immune reagent pack 201, which is a target for reading, in front of the RFID reader 602, and moves the biochemical reagent pack 301 directly below the RFID reader 601. Subsequently, the reagent information recorded in the RFID tags 203 and 302 of the target reagent packs 201 and 301 is read by the RFID readers 601 and 602 in a stopped state.

Note that the RFID readers 601 and 602 are not necessarily installed in the reagent storage 105. For example, a form can be provided in which the RFID readers 601 and 602 are installed outside the reagent storage 105 and the user holds the RFID tags 203 and 302 of the reagent pack to the RFID reader at the time of injecting the reagent to read the tag information. In this case, it is advantageous that an RFID reader shared by the immune reagent pack 201 and the biochemical reagent pack 301 only has to be installed at one site.

FIG. 10 is a schematic perspective view of the third holding unit 405. As shown in FIG. 10, and as described above, the immune reagent pack 201 and the biochemical reagent pack 301 have different shapes from each other, the immune reagent pack 201 has a shape long in the vertical direction and short in the horizontal direction, compared with the biochemical reagent pack 301.

Therefore, the third holding unit 405 formed of the third hole is formed of two regions having different shapes, a first region 701 and a second region 702, which correspond to the difference in the shapes of the packs. In other words, the second region 702 is provided on the upper side in the vertical direction from the first region 701, has a diameter larger than that of the first region 701, and the shape matches the shape of the biochemical reagent pack 301 in the vertical direction and in the horizontal direction. Moreover, the shape of the first region 701 matches the shape of the immune reagent pack 201 in the horizontal direction. Furthermore, the sum of the length of the first region 701 and the second region 702 in the vertical direction matches that of the immune reagent pack 201.

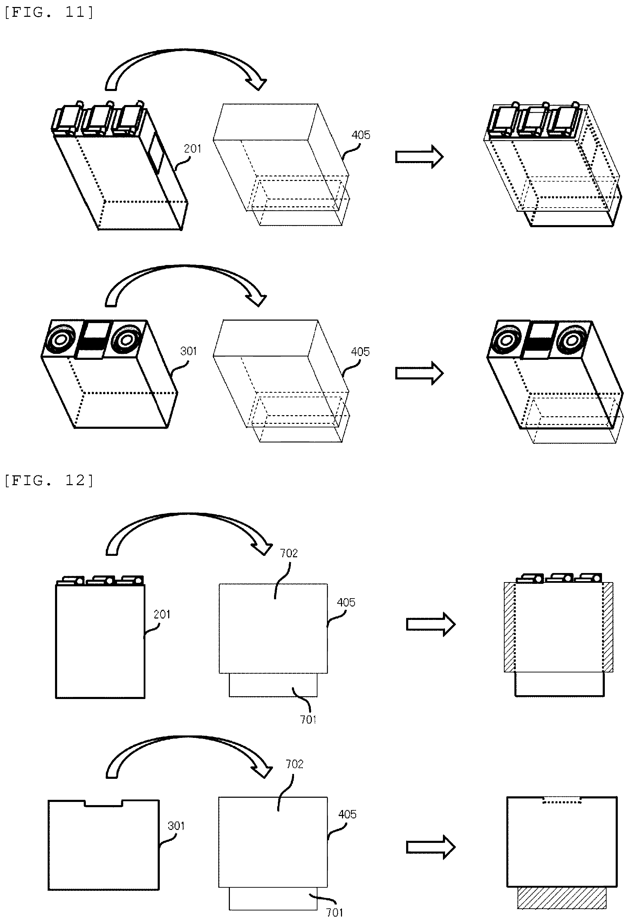

FIG. 11 is a schematic perspective view at the time of housing the reagent packs 201 and 301 in the third holding unit 405. The upper side of FIG. 11 is an example housing of the immune reagent pack 201, and the lower side is an example housing of the biochemical reagent pack 301. Moreover, FIG. 12 is a diagram in the case in which FIG. 11 is viewed from the side surface, and hatched portions show the gap between the reagent packs 201 and 301 and the third holding unit 405.

As described above, the second region 702 has the shape in the horizontal direction matches the biochemical reagent pack 301, i.e., its width is wider in the horizontal direction than that of the immune reagent pack 201. Therefore, a gap occurs when the immune reagent pack 201is housed.

On the other hand, since in the third holding unit 405, the length in the vertical direction matches that of the immune reagent pack 201, i.e., the length is longer in the vertical direction than the biochemical reagent pack 301, a gap occurs in the first region 701 at the time of housing the biochemical reagent pack 301.

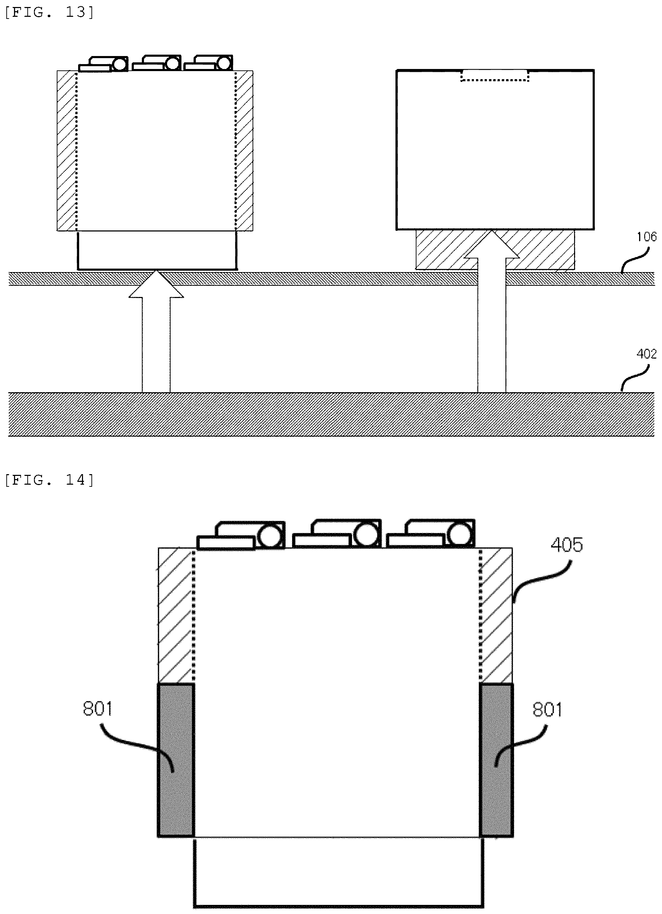

FIG. 13 shows the relationship between the heights of the packs when the immune reagent pack 201 and the biochemical reagent pack 301 are housed in the third holding unit 405.

As shown in FIG. 13, the first region 701 and the second region 702 of the third holding unit 405 are designed such that the biochemical reagent pack 301 is higher in the height of the bottom surface of the pack when housed.

On the other hand, as shown in FIG. 13, the first region 701 and the second region 702 of the third holding unit 405 are designed such that the height of the upper surface of the pack when holding the immune reagent pack 201 or the biochemical reagent pack 301 in the third hole is the same between the immune reagent pack 201 and the biochemical reagent pack 301.

In this manner, the installation height of the bottom surface is changed corresponding to the type of the pack, and thus it is possible to achieve reagent cooling temperatures different in types of packs as described below.

The temperature control in the reagent storage is sometimes different in target temperatures between biochemical reagents and immune reagents, for example, temperatures of 5 to 15°C for the biochemical reagent and temperatures of 5 to 10°C for the immune reagent. In the present invention, since the immune reagent and the biochemical reagent are stored in the reagent storage 105 intended to control the immune reagent and the biochemical reagent at the same temperature, it is desired to match with the conditions on the immune side having a narrower control range.

Here, in the reagent storage 105 of the automatic analyzer 101 of the present example, by cooling the air in the reagent storage 105 at a specified temperature using a cooling unit, the jacket 402 cools the reagents housed in the reagent packs 201 and 301. Therefore, the temperature of the air that cools the reagent is not fully uniform in the reagent storage 105, having a distribution depending on the distance from the cooling surface of the jacket 402. That is, the temperature of the air becomes lower as closer to the cooling surface of the jacket 402.

By utilizing the distribution properties, the installation height is changed for each of the types of packs, i.e., the distance from the cooling surface of the jacket 402 is changed for each of the types of packs, and thus it is possible to achieve different reagent cooling temperatures.

In the case of the present example, as shown in FIG. 13, the biochemical reagent pack 301 is more apart from the jacket 402 than the immune reagent pack 201. Therefore, the reagent cooling temperature of the biochemical reagent pack 301 becomes higher by the difference in the distance than that of the immune reagent pack 201. Such a design is effective in the case in which the specifications of the reagent cooling temperature vary depending on the types of packs.

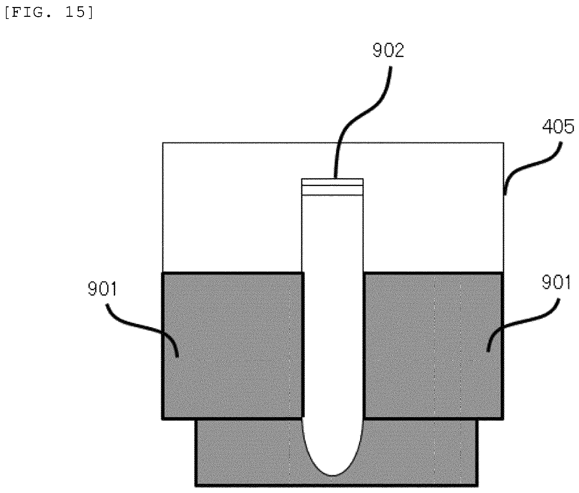

Moreover, there is a case in which the use of an auxiliary adapter is desired. In the following, this case will be described with reference to FIG. 14 and FIG. 15. FIG. 14 is a side view in a state where an auxiliary adapter is attached to the third holding unit 405, and FIG. 15 is a side view in a state where an auxiliary adapter that installs a test tube on the third holding unit 405 is attached.

As shown in FIG. 12, in the case in which the immune reagent pack 201 is installed on the third holding unit 405, a gap occurs between the third holding unit 405 and the immune reagent pack 201. Therefore, the holding performance in the horizontal direction might be impaired. On the other hand, as shown in FIG. 14, an auxiliary adapter 801 that buries a gap occurring at the time of installing the immune reagent pack 201 in the third holding unit 405 is attached to bury the gap, and thus it is possible to enhance the holding stability of the pack in the horizontal direction, and for example, it is possible to restrain a swing of the pack due to analyzer vibrations such as the rotation of the reagent disk 106.

Note that in FIG. 14, the description is made in which the auxiliary adapter 801 that buries a gap occurring between the third holding unit 405 and the immune reagent pack 201 is taken as an example. In addition to this, an auxiliary adapter that buries a gap occurring between the third holding unit 405 and the biochemical reagent pack 301 can also be attached.

Furthermore, depending on the shape of the auxiliary adapter, containers other than the reagent pack can be placed on the reagent pack holding unit 107. For example, in the reagent storage 105, a request for installing a calibrator and a sample vessel containing a quality control sample is sometimes made, other than the reagent packs 201 and 301.

Therefore, as shown in FIG. 15, the first holding unit 403, the second holding unit 404, and the third holding unit 405 are further formed to have an auxiliary adapter 901 that holds a test tube 902 as a sample vessel containing a sample. The shape of this auxiliary adapter 901 is not particularly specified as long as the test tube 902 can be installed by burying a gap between the holding units. It is desirable to provide variations so as to correspond to various shapes (lengths and diameters) of test tubes such as a fine blood collecting tube other than the calibrator described above.

In this case, an analyzer layout in which the sample dispensing mechanism 104 is accessible to the reagent disk 106 is achieved, and thus it is also possible to dispense a sample housed in the reagent pack holding unit 107 for measurement.

Moreover, in the case of the automatic analyzer 101 of the present example, desirably, the auxiliary adapter 901 can meet any of the first holding unit 403, the second holding unit 404, and the third holding unit 405.

Next, the effect of the present example will be described.

The reagent storage 105 of the automatic analyzer 101 of the present example described above has the first holding unit 403 that is capable of holding only the immune reagent pack 201 containing the first reagent in the reagents, the second holding unit 404 that is capable of holding only the biochemical reagent pack 301 containing the second reagent different in the type of the first reagent, and the third holding unit 405 that is capable of holding both the immune reagent pack 201 and the biochemical reagent pack 301. Thus, it is possible to freely set the allocation of various reagent packs housed in the third holding unit 405 by the user, and accordingly, it is possible to provide flexibility in the limited number of housings, which leads to the improvement of useability. moreover, since the third holding unit 405 that needs a wide space by all holding units is unnecessary, it is possible to obtain effects that restrain an increase in the reagent storage 105 and that the analyzer is increased in size.

Furthermore, the immune reagent pack 201 and the biochemical reagent pack 301 are formed in a rectangular parallelepiped with the aspiration port that aspirates a reagent as an upper surface. The shape of the immune reagent pack 201 is formed longer in the vertical direction and shorter in the horizontal direction than the biochemical reagent pack 301 with an aspiration port as an upper surface. The first holding unit 403 forms the first hole, the second holding unit 404 forms the second hole, and the third holding unit 405 forms the third hole. Since the third hole has the first region 701 and the second region 702 provided in the vertical direction on the upper side of the first region 701 and having a diameter larger than the first region 701, it is possible to minimize the configuration of the third holding unit 405.

Moreover, the holding units of the reagent packs 201 and 301 are arranged in a double ring in the reagent storage 105 and only the second holding unit 404 is arranged on the inner circumferential side. Thus, it is possible to obtain effects that the RFID tag 203 provided on the side surface of the immune reagent pack 201 is arranged so as to be directed to the outer circumferential side of the reagent storage 105 and that it is possible to install the RFID reader 602 on the outer circumferential side with a large space.

Furthermore, the first holding unit 403 and the third holding unit 405 are alternately arranged on the outer circumferential side. Thus, it is possible to obtain effects that the bias of weight in the case in which the reagent packs 201 and 301 are entirely mounted is reduced and that it is possible to bring the center axis in centrifugal processing close to the rotation center of the reagent disk 106.

Moreover, the first region 701 and the second region 702 of the third holding unit 405 are designed such that the height of the upper surface of the pack at the time of holding the immune reagent pack 201 or the biochemical reagent pack 301 in the third hole is the same between the immune reagent pack 201 and the biochemical reagent pack 301. Thus, the different distances are provided from the cooling surface of the reagent storage 105, and it is possible to control cooling temperatures different in the same reagent storage 105.

Furthermore, since the immune reagent pack 201 and the biochemical reagent pack 301 have different cooling temperatures, it is possible to provide a reagent configuration significantly suited for a case in which different distances are provided from the cooling surface.

Moreover, the immune reagent pack 201 has the RFID tag 203 that stores reagent information in the pack on the side surface. The biochemical reagent pack 301 has the RFID tag 302 that stores reagent information in the pack on the upper surface. The RFID reader 602 that reads the reagent information stored in the RFID tag 203 is included on the side surface of the reagent storage 105. The RFID reader 601 that reads the reagent information stored in the RFID tag 302 is included in the upper part of the reagent storage 105. Thus, it is possible to install the RFID readers 601 and 602 in the reagent storage 105 to eliminate the necessity of reading the RFID tags 203 and 302 by the user before injection. Accordingly, it is possible to intend to reduce the burden of the user.

Furthermore, the auxiliary adapter 801 that buries a gap occurring at the time of installing the immune reagent pack 201 on the third holding unit 405 is further included. Thus, it is possible to eliminate a possibility of causing an event that the immune reagent pack 201 is inclined due to a worst probability caused by the rotation of the reagent disk 106, and it is possible to achieve stable analysis operations.

Moreover, all the first holding unit 403, the second holding unit 404, and the third holding unit 405 further have the auxiliary adapter 901 that holds the sample vessel containing a sample. Thus, it is possible to also house a quality control sample and the like that have to be cooled for storage, and it is possible to store sample vessels in the analyzer. Accordingly, it is possible to obtain effects that time and effort for injection every time of usage are eliminated to further intend to improve useability and that further space saving is intended without providing exclusive storage spaces.

### <Others>

Note that the present invention is not limited to the foregoing example, and various modifications and applications are possible. The foregoing example is described in detail for easy understanding of the present invention, and the present invention is not necessarily limited to ones having all the described configurations.

For example, in the foregoing example, the case is described in which the types of analysis vary between the first reagent for immune items and the second reagent for biochemical items. The first reagent and the second reagent are not necessarily used for different analysis items. It is possible to provide the first reagent and the second reagent for the same analysis items such as for immune analysis items or for biochemical analysis items.

### Reference Signs List

101: automatic analyzer
102: sample erection disk
103: sample vessel
104: sample dispensing mechanism
105: reagent storage
106: reagent disk
107: reagent pack holding unit
108: reagent dispensing mechanism
109: reagent dispensing mechanism
110: incubator disk
111: reagent discharge position
112: magnetic particle stirring arm
113: reaction vessel disposal hole
114: incubator block
115: reaction liquid stirring unit
116: reaction vessel tray
117: first reaction vessel transport unit
118: sample discharge position
119: second reaction vessel transport unit
120: immunodetection unit
121: reaction liquid aspiration position
122: stirring unit
123: biochemical detection unit
124: reaction cell cleaning mechanism
125: control unit
126: operation unit
127: storage device
128: control device
201: immune reagent pack (first reagent pack)
202: lid portion
203: RFID tag (first tag)
301: biochemical reagent pack (second reagent pack)
302: RFID tag (second tag)
401: lid
402: jacket
403: first holding unit
404: second holding unit
405: third holding unit
406: reagent aspiration hole
407: reagent aspiration hole
601: RFID reader
602: RFID reader
701: first region
702: second region
801: auxiliary adapter
901: auxiliary adapter (sample auxiliary adapter)
902: test tube

## Claims

1. An automatic analyzer (101) that analyzes a sample using reagents according to a predetermined analysis item, the automatic analyzer (101) comprising:
a reagent storage (105) that stores reagent packs containing the reagents;
a first holding unit (403) configured to hold only a first reagent pack containing a first reagent among the reagents; and
a second holding unit (404) configured to hold only a second reagent pack containing a second reagent that is different from the first reagent, **characterized in that** the reagent storage (105) includes
a third holding unit (405) configured to hold both the first reagent pack and the second reagent pack,
wherein: the first reagent pack and the second reagent pack are formed in a rectangular parallelepiped shape with an aspiration port for sucking reagents as an upper surface;
the first reagent pack is formed to be longer in a vertical direction and shorter in a horizontal direction than that of the second reagent pack with the aspiration port as the upper surface;
the first holding unit (403) forms a first hole, the second holding unit (404) forms a second hole, and the third holding unit (405) forms a third hole; and
the third hole has a first region (701) and a second region (702), which is on an upper side of the first region (701) in the vertical direction and has a diameter larger than that of the first region (701).

2. The automatic analyzer (101) according to claim 1,
wherein: a holding unit of the reagent packs is disposed in a double ring in the reagent storage (105); and
only the second holding unit (404) is disposed on an inner peripheral side.

3. The automatic analyzer (101) according to claim 2,
wherein the first holding unit (403) and the third holding unit (405) are alternately disposed on an outer peripheral side.

4. The automatic analyzer (101) according to claim 1,
wherein the first region (701) and the second region (702) of the third holding unit (405) are designed such that when the first reagent pack or the second reagent pack is held in the third hole, a height of an upper surface of a vessel is the same for the first reagent pack and the second reagent pack.

5. The automatic analyzer (101) according to claim 4,
wherein the first reagent pack and the second reagent pack have different cold insulation temperatures.

6. The automatic analyzer (101) according to claim 3,
wherein: the first reagent pack has a first tag on a side surface for storing reagent information in a pack;
the second reagent pack has a second tag on an upper surface for storing reagent information in a pack;
a reader (601) for reading the reagent information stored in the first tag is provided on a side surface of the reagent storage (105); and
a reader (602) for reading the reagent information stored in the second tag is provided on an upper portion of the reagent storage (105).

7. The automatic analyzer (101) according to claim 1, further comprising:
an auxiliary adapter (801) that fills a gap generated when the first reagent pack is installed on the third holding unit (405).

8. The automatic analyzer (101) according to claim 1,
wherein each of the first holding unit (403), the second holding unit (404), and the third holding unit (405) further includes a sample auxiliary adapter (801) for holding a sample vessel containing a sample.

9. The automatic analyzer (101) according to claim 1,
wherein measurement items of the first reagent and the second reagent are different.

10. A method of storing reagents in an automatic analyzer (101), comprising:
in a reagent storage (105) that stores reagent packs containing the reagents,
storing a first reagent pack in a first holding unit (403) configured to hold only the first reagent pack containing a first reagent among the reagents; and
storing a second reagent pack in a second holding unit (404) configured to hold only the second reagent pack containing a second reagent that is different from the first reagent, the method being **characterised by**
storing both the first reagent pack and the second reagent pack by a third holding unit (405) configured to hold both the first reagent pack and the second reagent pack,
wherein: the first reagent pack and the second reagent pack are formed in a rectangular parallelepiped shape with an aspiration port for sucking reagents as an upper surface;
the first reagent pack is formed to be longer in a vertical direction and shorter in a horizontal direction than that of the second reagent pack with the aspiration port as the upper surface;
the first holding unit (403) forms a first hole, the second holding unit (404) forms a second hole, and the third holding unit (405) forms a third hole; and
the third hole has a first region (701) and a second region (702), which is on an upper side of the first region (701) in the vertical direction and has a diameter larger than that of the first region (701).

## Patentansprüche

1. Automatische Analyseeinrichtung (101), die eine Probe unter Verwendung von Reagenzien gemäß einem vorgegebenen Analysegegenstand analysiert, wobei die automatische Analyseeinrichtung (101) Folgendes umfasst:
einen Reagenzienspeicher (105), der Reagenzienpackungen, die die Reagenzien enthalten, speichert;
eine erste Halteeinheit (403), die konfiguriert ist, lediglich eine erste Reagenzienpackung zu halten, die ein erstes Reagens der Reagenzien enthält; und
eine zweite Halteeinheit (404), die konfiguriert ist, lediglich eine zweite Reagenzienpackung zu halten, die ein zweites Reagens, das vom ersten Reagens verschieden ist, enthält,
**dadurch gekennzeichnet, dass** der Reagenzienspeicher (105) eine dritte Halteeinheit (405) enthält, die konfiguriert ist, sowohl die erste Reagenzienpackung als auch die zweite Reagenzienpackung zu halten,
wobei die erste Reagenzienpackung und die zweite Reagenzienpackung in Form eines rechtwinkligen Parallelepipeds mit einer Ansaugöffnung zum Ansaugen von Reagenzien als eine obere Fläche ausgebildet sind;
die erste Reagenzienpackung so ausgebildet ist, dass sie in einer vertikalen Richtung länger und in einer horizontalen Richtung kürzer als die zweite Reagenzienpackung ist, mit der Ansaugöffnung als die obere Fläche;
die erste Halteeinheit (403) ein erstes Loch bildet, die zweite Halteeinheit (404) ein zweites Loch bildet und die dritte Halteeinheit (405) ein drittes Loch bildet; und
das dritte Loch einen ersten Bereich (701) und einen zweiten Bereich (702), der sich in der vertikalen Richtung auf einer oberen Seite des ersten Bereichs (701) befindet und einen Durchmesser aufweist, der größer als derjenige des ersten Bereichs (701) ist, aufweist.

2. Automatische Analyseeinrichtung (101) nach Anspruch 1,
wobei eine Halteeinheit der Reagenzienpackungen in einem zweifachen Ring im Reagenzienspeicher (105) angeordnet ist; und
lediglich die zweite Halteeinheit (404) auf einer Innenumfangsseite angeordnet ist.

3. Automatische Analyseeinrichtung (101) nach Anspruch 2,
wobei die erste Halteeinheit (403) und die dritte Halteeinheit (405) abwechselnd auf einer Außenumfangsseite angeordnet sind.

4. Automatische Analyseeinrichtung (101) nach Anspruch 1,
wobei der erste Bereich (701) und der zweite Bereich (702) der dritten Halteeinheit (405) derart entworfen sind, dass dann, wenn die erste Reagenzienpackung oder die zweite Reagenzienpackung im dritten Loch gehalten werden, eine Höhe einer oberen Fläche eines Behälters für die erste Reagenzienpackung und die zweite Reagenzienpackung gleich ist.

5. Automatische Analyseeinrichtung (101) nach Anspruch 4,
wobei die erste Reagenzienpackung und die zweite Reagenzienpackung verschiedene Kälteisolationstemperaturen aufweisen.

6. Automatische Analyseeinrichtung (101) nach Anspruch 3,
wobei die erste Reagenzienpackung eine erste Markierung auf einer Seitenfläche zum Speichern von Informationen über Reagenzien in einer Packung aufweist;
die zweite Reagenzienpackung eine zweite Markierung auf einer oberen Fläche zum Speichern von Informationen über Reagenzien in einer Packung aufweist;
eine Leseeinrichtung (601) zum Lesen der Reagenzieninformationen, die in der ersten Markierung gespeichert sind, auf einer Seitenfläche des Reagenzienspeichers (105) vorgesehen ist; und
eine Leseeinrichtung (602) zum Lesen der Reagenzieninformationen, die in der zweiten Markierung gespeichert sind, auf einem oberen Abschnitt des Reagenzienspeichers (105) vorgesehen ist.

7. Automatische Analyseeinrichtung (101) nach Anspruch 1, die ferner Folgendes umfasst:
einen Hilfsadapter (801), der einen Zwischenraum füllt, der erzeugt wird, wenn die erste Reagenzienpackung auf der dritten Halteeinheit (405) installiert ist.

8. Automatische Analyseeinrichtung (101) nach Anspruch 1,
wobei die erste Halteeinheit (403), die zweite Halteeinheit (404) und die dritte Halteeinheit (405) jeweils ferner einen Probenhilfsadapter (801) zum Halten eines Probenbehälters, der eine Probe enthält, enthalten.

9. Automatische Analyseeinrichtung (101) nach Anspruch 1,
wobei Messgegenstände des ersten Reagens und des zweiten Reagens verschieden sind.

10. Verfahren zum Speichern von Reagenzien in einer automatischen Analyseeinrichtung (101), das Folgendes umfasst:
in einem Reagenzienspeicher (105), der Reagenzienpackungen, die die Reagenzien enthalten, speichert,
Speichern einer ersten Reagenzienpackung in einer ersten Halteeinheit (403), die konfiguriert ist, lediglich die erste Reagenzienpackung zu halten, die ein erstes Reagens von den Reagenzien enthält; und
Speichern einer zweiten Reagenzienpackung in einer zweiten Halteeinheit (404), die konfiguriert ist, lediglich die zweite Reagenzienpackung zu halten, die ein zweites Reagens enthält, das vom ersten Reagens verschieden ist,
wobei das Verfahren **gekennzeichnet ist durch**
Speichern sowohl der ersten Reagenzienpackung als auch der zweiten Reagenzienpackung durch eine dritte Halteeinheit (405), die konfiguriert ist, sowohl die erste Reagenzienpackung als auch die zweite Reagenzienpackung zu halten,
wobei die erste Reagenzienpackung und die zweite Reagenzienpackung in Form eines rechtwinkligen Parallelepipeds mit einer Ansaugöffnung zum Ansaugen von Reagenzien als eine obere Fläche ausgebildet sind;
die erste Reagenzienpackung so ausgebildet ist, dass sie in einer vertikalen Richtung länger und in einer horizontalen Richtung kürzer als die zweite Reagenzienpackung ist, mit der Ansaugöffnung als die obere Fläche;
die erste Halteeinheit (403) ein erstes Loch bildet, die zweite Halteeinheit (404) ein zweites Loch bildet und die dritte Halteeinheit (405) ein drittes Loch bildet; und
das dritte Loch einen ersten Bereich (701) und einen zweiten Bereich (702), der sich in der vertikalen Richtung auf einer oberen Seite des ersten Bereichs (701) befindet und einen Durchmesser aufweist, der größer als derjenige des ersten Bereichs (701) ist, aufweist.

## Revendications

1. Analyseur automatique (101) qui analyse un échantillon à l'aide de réactifs en fonction d'un élément d'analyse prédéterminé, l'analyseur automatique (101) comprenant :
un stockage de réactifs (105) qui stocke des packs de réactifs contenant les réactifs ;
une première unité de support (403) configurée pour supporter uniquement un premier pack de réactif contenant un premier réactif parmi les réactifs ; et
une deuxième unité de support (404) configurée pour supporter uniquement un deuxième pack de réactif contenant un deuxième réactif qui est différent du premier réactif,
**caractérisé en ce que** le stockage de réactifs (105) inclut une troisième unité de support (405) configurée pour supporter à la fois le premier pack de réactif et le deuxième pack de réactif,
dans lequel : le premier pack de réactif et le deuxième pack de réactif sont formés dans une forme de parallélépipède rectangle avec un orifice d'aspiration destiné à aspirer des réactifs en tant que surface supérieure ;
le premier pack de réactif est formé pour être plus long dans une direction verticale et plus court dans une direction horizontale que le deuxième pack de réactif avec l'orifice d'aspiration en tant que surface supérieure ;
la première unité de support (403) forme un premier trou, la deuxième unité de support (404) forme un deuxième trou, et la troisième unité de support (405) forme un troisième trou ; et
le troisième trou présente une première région (701) et une deuxième région (702), qui est sur un côté supérieur de la première région (701) dans la direction verticale et qui présente un diamètre supérieur à celui de la première région (701).

2. Analyseur automatique (101) selon la revendication 1,
dans lequel : une unité de support des packs à réactifs est disposée dans un double anneau dans le stockage de réactifs (105) ; et
seule la deuxième unité de support (404) est disposée sur un côté périphérique intérieur.

3. Analyseur automatique (101) selon la revendication 2,
dans lequel la première unité de support (403) et la troisième unité de support (405) sont disposées en alternance sur un côté périphérique extérieur.

4. Analyseur automatique (101) selon la revendication 1,
dans lequel la première région (701) et la deuxième région (702) de la troisième unité de support (405) sont conçus de telle sorte que, quand le premier pack de réactif ou le deuxième pack de réactif sont supportés dans le troisième trou, une hauteur d'une surface supérieure d'un récipient est la même pour le premier pack de réactif et le deuxième pack de réactif.

5. Analyseur automatique (101) selon la revendication 4,
dans lequel le premier pack de réactif et le deuxième pack de réactif présentent des températures d'isolation du froid différentes.

6. Analyseur automatique (101) selon la revendication 3,
dans lequel : le premier pack de réactif présente une première étiquette sur une surface latérale destinée à stocker des informations de réactif dans un pack ;
le deuxième pack de réactif présente une deuxième étiquette sur une surface supérieure destinée à stocker des informations de réactif dans un pack ;
un lecteur (601) destiné à lire les informations de réactif stockées dans la première étiquette est prévu sur une surface latérale du stockage de réactifs (105) ; et
un lecteur (602) destiné à lire les informations de réactif stockées dans la deuxième étiquette est prévu sur une portion supérieure du stockage de réactifs (105).

7. Analyseur automatique (101) selon la revendication 1, comprenant en outre :
un adaptateur auxiliaire (801) qui remplit un intervalle généré quand le premier pack de réactif est installé sur la troisième unité de support (405).

8. Analyseur automatique (101) selon la revendication 1,
dans lequel chacune de la première unité de support (403), de la deuxième unité de support (404), et de la troisième unité de support (405) inclut en outre un adaptateur auxiliaire d'échantillon (801) destinée à supporter un récipient à échantillon contenant un échantillon.

9. Analyseur automatique (101) selon la revendication 1,
dans lequel des éléments de mesurage du premier réactif et du deuxième réactif sont différents.

10. Procédé de stockage de réactifs dans un analyseur automatique (101) comprenant les étapes consistant à :
dans un stockage de réactifs (105) qui stocke des packs de réactif contenant les réactifs,
stocker un premier pack de réactif dans une première unité de support (403) configuré pour stocker uniquement le premier pack de réactif contenant un premier réactif parmi les réactifs ; et
stocker un deuxième pack de réactif dans une deuxième unité de support (404) configurée pour supporter uniquement le deuxième pack de réactif contenant un deuxième réactif qui est différent du premier réactif,
le procédé étant **caractérisé par** les étapes consistant à :
stocker à la fois le premier pack de réactif et le deuxième pack de réactif via une troisième unité de support (405) configurée pour supporter à la fois le premier pack de réactif et le deuxième pack de réactif,
dans lequel : le premier pack de réactif et le deuxième pack de réactif sont formés dans une forme de parallélépipède rectangle avec un orifice d'aspiration destiné à aspirer des réactifs en tant que surface supérieure ;
le premier pack de réactif est formé pour être plus long dans une direction verticale et plus court dans une direction horizontale que le deuxième pack de réactif avec l'orifice d'aspiration en tant que surface supérieure ;
la première unité de support (403) forme un premier trou, la deuxième unité de support (404) forme un deuxième trou, et la troisième unité de support (405) forme un troisième trou ; et
le troisième trou présente une première région (701) et une deuxième région (702), qui est sur un côté supérieur de la première région (701) dans la direction verticale et qui présente un diamètre supérieur à celui de la première région (701).
s
